# EUROPEAN PATENT APPLICATION

(11) **EP 1 785 306 A2**
(43) Date of publication of application: **16.05.2007**
(21) Application number: 06123867.1
(22) Date of filing: 10.11.2006
(51) Int. Cl.: B60K 11/04, B62D 25/08, B60K 11/08

(54) **Air guide structure adapted for motor vehicle**

(30) Priority: 11.11.2005 JP 2005327902
(71) Applicant: Calsonic Kansei Corporation, Tokyo 164-8602 (JP)
(72) Inventor: Ito, Osamu, Nakano-ku Tokyo 164-8602 (JP); Kobayashi, Hideki, Nakano-ku Tokyo 164-8602 (JP); Watanabe, Toshiharu, Nakano-ku Tokyo 164-8602 (JP); Mori, Eiichi, Nakano-ku Tokyo 164-8602 (JP); Araki, Shinji, Nakano-ku Tokyo 164-8602 (JP)
(74) Representative: Intes, Didier Gérard André

(57) **Abstract**

An air guide structure includes a radiator core support (1) having a radiator core support side member (4; 5), and an air guide (8; 9) that is integrally formed with the radiator core support side member (4; 5) through a connecting portion (7). The air guide (8; 9) is capable of being bent between a formation state in which it is arranged in a lateral direction of a motor vehicle body and an in-use state in which it projects forward and is fixed to the radiator core support (1) by an engaging mechanism formed on the air guide (8; 9) and the radiator core support (1). A releasing mechanism is provided to release the engagement of the engaging mechanism when a force generated in vehicle crash acts on the air guide (8; 9) from its front side.

## Description

The present invention relates to an air guide structure which is adapted for a motor vehicle and includes a radiator core support, and right and left air guides attached to the radiator core support.

A conventional air guide structure adapted for a motor vehicle of this kind is disclosed in Japanese patents laid-open publication No. 2003 - 306047 and No. 2003 - 104235. These conventional air guide structures have a right air guide attached to a right radiator core support side member, and a left air guide attached to a left radiator core support side member, both air guides extending forward in a longitudinal direction of a motor vehicle body.

Another conventional air guide structure is disclosed in Japanese patent laid-open No. 2005 - 104212. This conventional air guide structure has a right air guide and a left air guide, which are fixed to right and left radiator core support side members by connecting sections having cut-off portions, respectively. The right and left air guides are attached to extend in a lateral direction of a motor vehicle body at first, and then they are bent at the connecting portions so as to extend forward in a longitudinal direction of the motor vehicle body when used.

In these three conventional air guide structures, the right and left air guides are fixed to the right and left radiator core support side members by using bolts, respectively.

The above known conventional air guide structures, however, encounter a problem in that the air guides act as a rigid plate against the radiator core support to cause cracks and/or fractures in a bolted portion of the air guide and the radiator core support when excessive force due to vehicle crash acts on the air guide/air guides from a front side thereof. In case of the cracks and/or fractures in the bolted portion, an entire-part replacement for the radiator core support and the air guide/air guides is needed, which increases its repair costs.

It is, therefore, an object of the present invention to provide an air guide structure, adapted for a motor vehicle, which overcomes the foregoing drawbacks and can prevent a radiator core support from cracks and fractures when an excessive force due to vehicle crash acts on an air guide from a front side thereof, thereby decreasing repair costs of the air guide structure.

According to an aspect of the present invention there is provided an air guide structure, adapted for a motor vehicle, which includes a radiator core support having a radiator core support side member, and an air guide that is integrally formed with the radiator core support side member through a connecting portion. The air guide is capable of being bent between a formation state in which the air guide is arranged in a lateral direction of a motor vehicle body and an in-use state in which the air guide projects forward to be fixed to the radiator core support by an engaging mechanism formed on the air guide and the radiator core support. A releasing mechanism is provided to release the engagement of the engaging mechanism when a force generated in vehicle crash acts on the air guide from a front side thereof.

Therefore, the air guide structure of the present invention can prevent cracks and/or fractures from occurring in the radiator core support when excessive force due to vehicle crash acts on an air guide from the front side thereof, because the releasing mechanism releases the engagement between the air guide and the radiator core support, thereby preventing the air guide to act as a rigid plate against the radiator core support. This can decrease repair costs of the air guide structure.

Preferably, the releasing mechanism includes a peripheral portion of a latch-hole that is formed in the air guide, and a tapered portion that is formed on a latch-projecting portion that is provided with the radiator core support to project forward and be contactable with the peripheral portion.

Therefore, the releasing mechanism can be built in a simple structure by using only the peripheral portion and the tapered portion.

Preferably, the tapered portion is formed at a front side of the latch-projecting portion, and the latching portion, which constitutes the engaging mechanism and is contactable with the peripheral portion, is formed at a rear side of the latch-projecting portion.

Therefore, the latch-projecting portion can be formed to have both the tapered portion and the latching portion thereon, and accordingly the engaging mechanism and the releasing mechanism can be formed in smaller dimensions and at lower manufacturing costs.

Preferably, the connecting portion has a first fragile portion, which is weaker in rigidity than the radiator core support side portion and the air guide excluding the fragile portion so that the air guide can be bent at the first fragile portion.

Therefore, the air guide can be easily bent forward at the connecting portion when the air guide is set to project forward, and the first fragile portion can easily bend and tear when a large force due to vehicle crash acts thereon, preventing the radiator core support from being cracked and/or fractured.

Preferably, a second fragile portion is provided on the air guide at the rear side of the releasing mechanism.

Therefore, the second fragile portion can be easily bent and torn when large force acts thereon, promoting the prevention of cracks and/or fractures in the radiator core support.

Preferably, the second fragile portion is provided at a rear side of the latch-hole.

Therefore, the air guide can surely and easily slide along the tapered portion by bending and/or tearing-off of the second fragile portion located at the rear part of the latch-hole and the tapered portion.

The objects, features and advantages of the present invention will become apparent as the description proceeds when taken in conjunction with the accompanying drawings, in which:
FIG. 1 is a front perspective view showing an air guide structure of an embodiment according to the present invention when it is manufactured, but before being in-use;
FIG. 2 is an enlarged cross-sectional view, taken along a line S2 - S2 in FIG 1, showing a connecting portion between an air guide and a radiator core support, each constituting the air guide structure of the embodiment shown in FIG. 1;
FIG. 3A is a fragmentary front view showing the air guide structure shown in FIG. 1 before an in-use state, where the air guide is fixed to extend in a lateral direction of a motor vehicle body, and FIG. 3B is a fragmentary front view showing the air guide structure shown in FIG. 1, being in the in-use state where the air guide is bent to extend in a longitudinal direction of the motor vehicle body;
FIG. 4 is an enlarged cross-sectional view, taken along a line S4 - S4 in FIG. 3B, showing the connecting portion, being in the in-use state where the air guide is bent and fixed to the radiator core support;
FIG. 5 is a front perspective view showing the air guide structure of the embodiment, in which the air guides are fixed to the radiator core support, when used; and
FIG 6A is a cross-sectional view showing the connecting portion right before a vehicle crash, and FIG. 6B is a cross-sectional view showing the connecting portion after a vehicle crash.

Throughout the following detailed description, similar reference characters and numbers refer to similar elements in all figures of the drawings, and their descriptions are omitted for eliminating duplication.

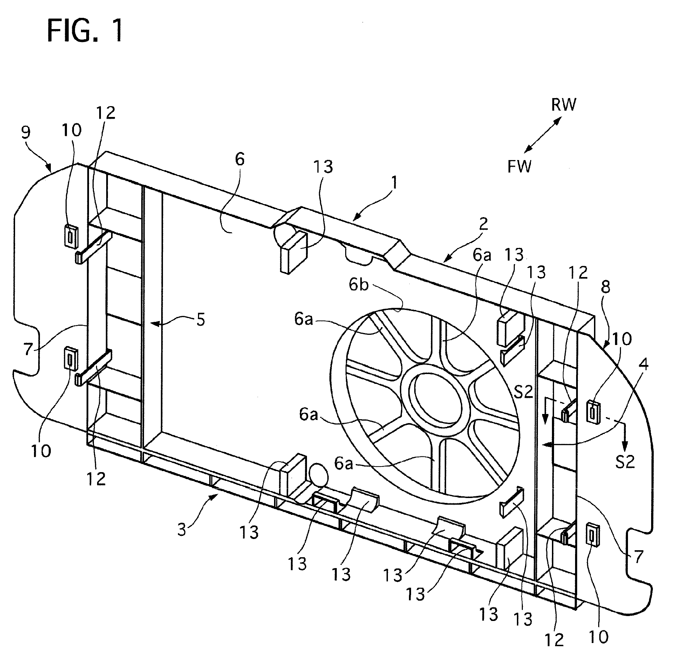

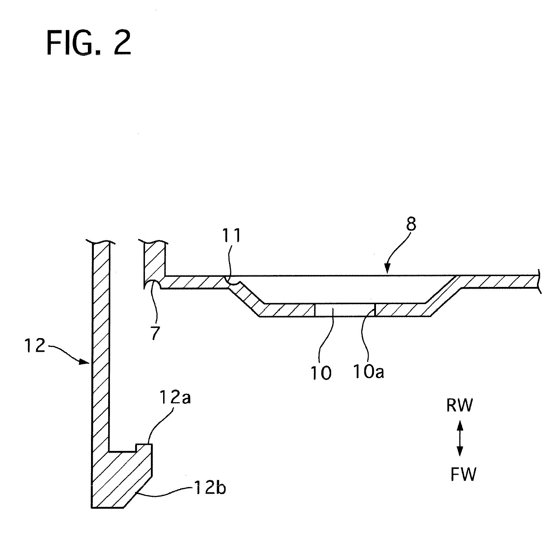

Referring to FIGS. 1 and 2 of the drawings, there is shown an air guide structure, which is adapted for a motor vehicle, of a preferred embodiment of according to the present invention. In the following description, terms "right" and "left" are used with respect to a not shown motor vehicle body, not with respect to the attached drawings.

The air guide structure is mounted on a front side of the motor vehicle body. The air guide structure includes a radiator core support 1, a right air guide 8 and a left air guide 9.

The radiator core support 1 has a radiator core support upper member 2, a lower radiator core support lower member 3 arranged under and parallel to the radiator core support upper member 2, a radiator core support left side member 4 connected with left edge portions of the upper and lower members 2 and 3, and a radiator core support right side member 5 connected with right edge portions of the upper and lower members 2 and 3. The upper member 2 is formed in a plate shape and extends in a lateral direction of the motor vehicle body when the radiator core support 1 is mounted on the front side of the motor vehicle, the lower member 3 is formed in a letter-U shape with a plurality of ribs. The left and right side members 4 and 5 extend vertically. A shroud portion 6 is integrally formed at inner sides of the upper, lower, side members 2, 3, 4 and 5 so as to guide air generated when a motor vehicle runs toward a not-shown motor-fan which is arranged in a hole 6b and supported to an inner peripheral portion of the hole 6b by a plurality of fan-stays 6a.

The left and right side members 4 and 5 are integrally formed with a left air guide 8 and a right air guide 9 through left and right connecting portions 7, respectively. The left and right connecting portions 7 are set to be weaker in rigidity than continuous portions of the air guides 8, 9 and the side members 4, 5. For example, they are formed to have a thin wall in the embodiment as shown in FIG 2. The connecting portions 7 correspond to a first fragile portion of the present invention.

The left and right air guides 8 and 9 extend in the lateral direction, and each of the air guide 8, 9 has a plate shape formed with upper and lower square latch-holes 10 being apart vertically from each other. A partly continuous groove 11 is formed to weaken rigidity of a portion near around the latch-hole 10. This portion corresponds to a second fragile portion of the present invention. The second fragile portion is not indispensable in the present invention.

On the other hand, the left and right side members 4 and 5 have upper and lower latch-projecting portions 12 on their inner side surfaces. The upper and lower latch-projecting portions 12 extend in a forward direction, indicated by an arrow FW in FIG 1, and their front end portions are bent toward the left and right air guides 8 and 9, respectively. The front end portions have a latching portion 12a formed on a rear surface thereof and a tapered portion 12b on a front surface thereof.

The latch-holes 10, formed in the left and right air guides 8 and 9, and the tapered portions 12b, formed on the upper and lower latch-projecting portions 12 of the left and right side members 4 and 5, act as a latch-releasing mechanism of the present invention.

The upper and lower members 2 and 3 are formed with a plurality of fixing portions, in various shapes and at various positions, for fixing not-shown heat exchangers.

All members, including the upper, lower and side members, and air guides 2, 3, 4, 5, 8 and 9 are integrally formed of resin material, which can reduce its manufacturing costs, ensuring these parts are prevented from falling and missing when the radiator core support 1 with the air guides 8 and 9 is manufactured. In addition, in this formation using injection molding, die can be simplified, decreasing its cost, because the air guides 8 and 9 are formed to extend in the lateral direction in a formation state and they are integrally formed with the radiator core support 1.

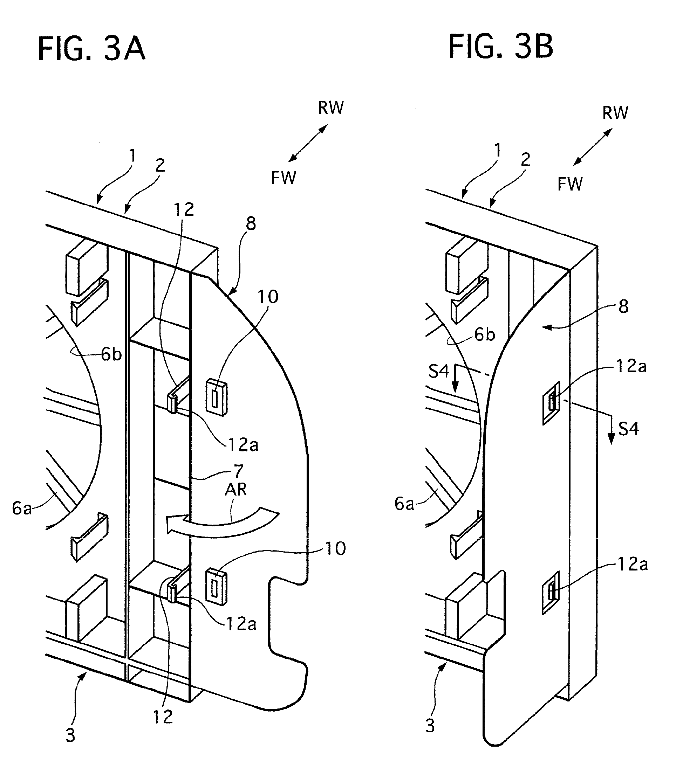

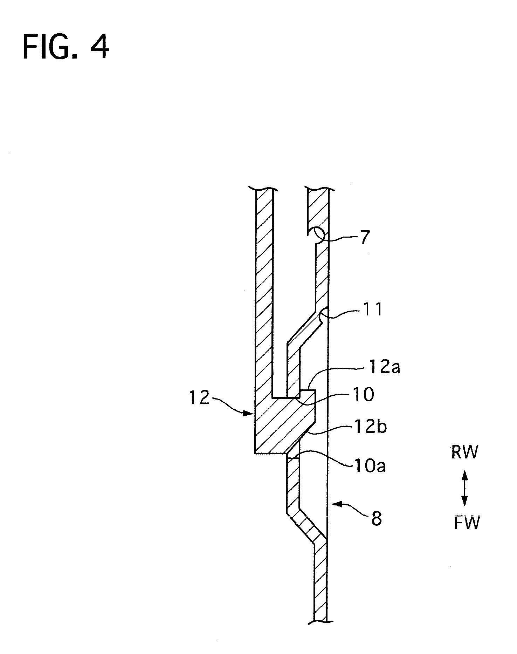

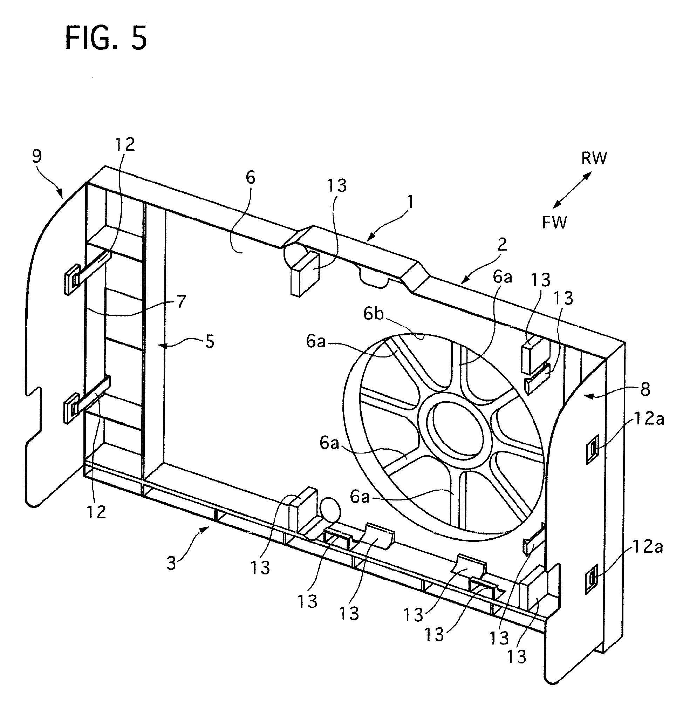

Before the radiator core support 1 formed in this way is installed on the motor vehicle body, the heat exchangers are attached to the radiator core support 1, and the left and right air guides 8 and 9 are bent forward by rotating them as indicated by an arrow AR in FIG 3A, at the connecting portions 7, as shown in FIG. 3B, so that the latching portions 12a can be engaged with peripheral portions 10a of the latch-holes 10 as shown in FIG 4. This engagement keeps the left and right air guides 8 and 9 fixed to the radiator core support 1 and projecting forward therefrom in an in-use state, as shown in FIG. 5, so as to guide the air generated while the motor vehicle runs and prevent blowing-back of hot air from an engine room. Then, the radiator core support 1 with the heat exchangers are installed on the motor vehicle body.

The peripheral portions 10a of the air guide 8 and the latching portion 12a of the radiator core support 1 act as an engaging mechanism of the present invention.

Incidentally, FIGS. 2, 3A, 3B and 4 shows only left sides of the radiator core support structure, while right sides thereof are bilaterally symmetrical with the left sides.

The operation of the air guide structure of the embodiment will be described.

The air guides 8 and 9 of the air guide structure of the embodiment usually guide, along their inner surfaces, the air generated while the motor vehicle runs and also prevent the blowing-back of hot air from the engine room.

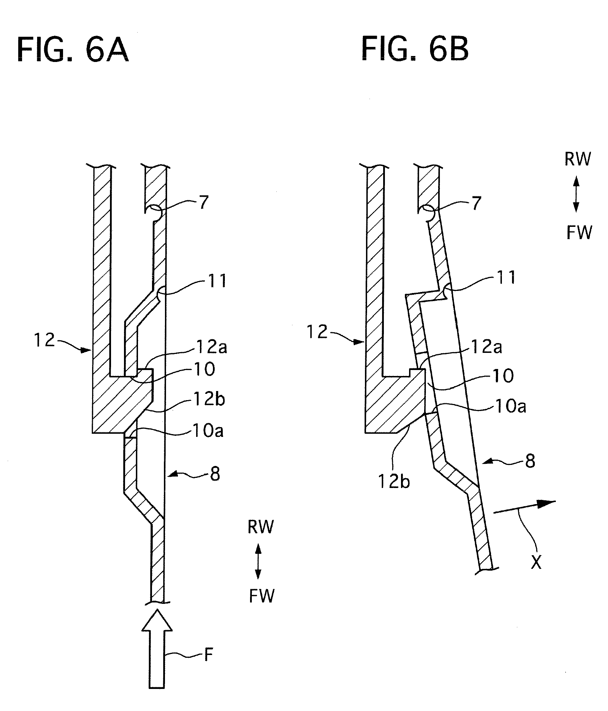

In case of vehicle crash where the air guide 8 is subjected to an excessive external force F from its front side as shown in FIG. 6A, the peripheral portion 10a is deformed in a rearward direction, indicated by an arrow RW in FIG. 6B, so that the front side the air guide 8 slides in the rearward direction along the tapered portion 12b of the latch-projecting portion 12. This slide of the peripheral portion 10a due to the deformation of the air guide 8 brings disengagement between the latching portion 12a and the peripheral portion 10a, the air guide 8 being rotated toward the outside in the lateral direction, as indicated by an arrow X in FIG. 6B, at the connecting portion 7.

Specifically, in the air guide structure of the embodiment, connection of the air guide 8 and the radiator core support side member 4 can be released in a vehicle crash where excessive force acts on the air guide 8 from its front side. This causes the air guide 8 not to act as a rigid plate against the side member 4, thereby protecting the side member 4 from cracking and/or fracturing. The operation of the right air guide 9 and the radiator core support right side member 5 is similar to that of the left air guide 8 and the radiator core support left side member 4, and therefore its explanation is omitted.

In addition, the portion formed with the groove 11 can easily be bent and torn when large force acts thereon from the front side of the air guide 8 in a vehicle crash, thereby promoting the prevention of cracks and fractures in the radiator core support 1.

The air guide structure of the embodiment has the following advantages.

The air guide 8, 9 and the radiator core support side member 4, 5 can be released from each other when excessive force due to vehicle crash acts on the air guide 8, 9 from its front side. This can prevent the radiator core support 1 from being cracked and/or fractured thanks to the air guide 8, 9 on which large force acts from the front side in vehicle crash, thereby decreasing repair costs of the air guide structure.

The releasing mechanism includes the peripheral portion 10a of the latch-hole 10 that is formed in the air guide 8, 9, and the tapered portion 12b that is formed on the latch-projecting portion 12 to be contactable with the peripheral portion 10a. This enables the releasing mechanism to be built in a simple structure and in a small dimensions.

The tapered portion 12b is formed at the front side of the latch-projecting portion 12, and the latching portion 12a, which is contactable with the peripheral portion 10a, is formed at the rear side of the latch-projecting portion 12. This enables the latch-projecting portion 12 to be formed to have both the tapered portion 12b and the latching portion 12a thereon, thereby enables the engaging mechanism and the releasing mechanism to be formed in smaller dimensions and at lower manufacturing costs.

The connecting portion 7 has the first fragile portion, which is weaker in rigidity than the radiator core support side portion 4, 5 and the air guide 8, 9 excluding the fragile portion so that the air guide 8, 9 can be bent at the first fragile portion. This enables the air guide 8, 9 to be easily bent toward the lateral direction at the connecting portion 7, and the first fragile portion can easily bend and tear when a large force acts thereon from the front side, preventing the radiator core support 1 from being cracked and/or fractured.

The portion with the groove 11, constituting the second fragile portion, is provided on the air guide 8, 9 at rear side of the latch-hole 10. This enables the portion with the groove 11 to be easily bent and torn when large force acts thereon from the front side, promoting the prevention of cracks and/or fractures in the radiator core support 1.

While the above has been particularly shown and described with reference to preferred embodiments thereof, it will be understood that various modifications may be made therein.

For example, in the above-described embodiment, the right and left air guides 8 and 9 are fixed to the radiator core support left and right side members 4 and 5, respectively, while only one air guide may be fixed to one of the radiator core support side members so that the other can be removed.

## Claims

1. An air guide structure, adapted for a motor vehicle, **characterized in that** it comprises :
a radiator core support (1) having a radiator core support side member (4; 5);
an air guide (8; 9) that is integrally formed with the radiator core support side member (4; 5) through a connecting portion (7) and is capable of being bent between a formation state in which the air guide (8; 9) is arranged in a lateral direction of a motor vehicle body and an in-use state in which the air guide (8; 9) projects forward and is fixed to the radiator core support (1) by an engaging mechanism formed on the air guide (8; 9) and the radiator core support (1); and
a releasing mechanism that is capable of releasing the engagement of the engaging mechanism when a force generated in vehicle crash acts on the air guide (8; 9) from a front side thereof.

2. The air guide structure according to claim 1, **characterized in that**
the releasing mechanism includes a peripheral portion (10a) of a latch-hole (10) that is formed in the air guide (8; 9), and a tapered portion (12b) that is formed on a latch-projecting portion (12) that is provided with the radiator core support (1) to project forward and be contactable with the peripheral portion (10a).

3. The air guide structure according to claim 2, **characterized in that**
the tapered portion (12b) is formed at a front side of the latch-projecting portion (12), and the latching portion (12a), which constitutes the engaging mechanism and is contactable with the peripheral portion (10a), is formed at a rear side of the latch-projecting portion (12).

4. The air guide structure according to any one of claims 1 to 3, **characterized in that**
the connecting portion (7) has a first fragile portion, which is weaker in rigidity than the radiator core support side portion (4; 5) and the air guide (8; 9) excluding the fragile portion so that the air guide (8; 9) can be bent at the first fragile portion.

5. The air guide structure according to any one of claims 1 to 4, **characterized in that**
a second fragile portion is provided on the air guide (8; 9) at rear side of the releasing mechanism.

6. The air guide structure according to claim 5, **characterized in that**
the second fragile portion is provided at a rear side of the latch-hole (10).
